# EUROPEAN PATENT APPLICATION

(11) **EP 1 166 640 A1**
(43) Date of publication of application: **02.01.2002**
(21) Application number: 01110172.2
(22) Date of filing: 07.05.2001
(51) Int. Cl.: A23G 3/00, A23G 3/20, A23G 3/30, A23G 9/24, A23G 9/28

(54) **Co-extruded confectionery product**

(30) Priority: 19.06.2000 GB 0014994
(71) Applicant: SOCIETE DES PRODUITS NESTLE S.A., 1800 Vevey (CH)
(72) Inventor: Ovaici, Hooman, Bishops Wharf, York YO23 1JF (GB); Jury, Mark, Thirsk, North Yorkshire Y07 2PH (GB)
(74) Representative: Pate, Frederick George

(57) **Abstract**

A confectionery product comprising a fat-containing confectionery material in a hollow or tubular form surrounding a filling comprising another confectionery material characterised in that the fat-containing confectionery material in a hollow or tubular form has a wall thickness of from 0.1 to 5mm.

## Description

### FIELD OF THE INVENTION

The present invention relates to a confectionery product and more especially to a confectionery product of a fat-containing confectionery material such as chocolate in a hollow or tubular form surrounding a filling comprising another confectionery material.

### BACKGROUND OF THE INVENTION

Coated confectionery products may be made either by enrobing a filling with liquid chocolate or couverture to form the coating which is afterwards solidified or they may be made by a shell moulding technique. However, there are important disadvantages of these methods.
1) For enrobing with liquid chocolate, many fat-based confectionery fillings such as mousse, ganache, praline, paste or cream have to undergo a preforming step which involves precooling and presolidifying into the desired shape before they are enrobed with the liquid chocolate otherwise their shape would deform, e.g. if they were pumped by forcing through a nozzle, they would be flowable under gravity or be deformed by the weight of the liquid chocolate as it flows over it and would deform and lose their shape before the chocolate coating solidifies causing a misshaped product. Not only does the preforming add an extra step to the process but this could compromise the texture and cause condensation problems. In addition, for longer, thinner fillings, there is a danger of breakage of the filling in the enrober.
2) Many confectionery fillings contain fat, e.g. mousses, truffles, praline, peanut butter. This fat may not be compatible with the fat present in chocolate, i.e. cocoa butter or equivalent. When such confectionery fillings are enrobed with liquid chocolate, the liquid fat of the filling may initially dissolve and / or migrate into the warm, liquid chocolate coating at a higher rate than if the chocolate was in the solid state at ambient temperature. This will soften the chocolate coating which is detrimental to the organoleptic properties of the coated product such as texture. This softening may also cause production difficulties further downstream, such as smearing of the softened chocolate onto the processing plant, scuffing and marking of the chocolate coating which is unnattractive, and pick-up of the coating onto to the inside of the primary wrapping material in contact with the finished product. Furthermore, the above mixing of the fats, or the increased fat migration, may reduce the shelf-life of the product. In addition, the relatively harder cocoa butter type fat which is mainly liquid during enrobing or moulding, will migrate into the soft centre spoiling the texture. If the cocoa butter is mainly solid as is the case with this invention, this will take place at a very much slower rate.
3) The shell moulding technique has the following disadvantages:
   (a) it is technically difficult for long thin fillings,
   (b) it is almost impossible to achieve coated products with thin walls, and
   (c) the products are difficult to demould.

EP 0603467-B1, the entirety of which is hereby incorporated by reference, discloses a process for plastically extruding a fat-containing confectionery material which comprises feeding the fat-containing confectionery material into an extruder and applying pressure to the fat-containing confectionery material in a substantially solid or semi-solid non-pourable form upstream of a flow constriction at a temperature at which the fat-containing confectionery material is extruded substantially isothermally and remains in a substantially solid or semi-solid non-pourable form to produce an axially homogeneous extruded product having a cross section that is of substantially the same profile as the die exit of the extruder, which is capable of retaining its shape and which has a temporary flexibility or plasticicity enabling it to be physically manipulated or plastically deformed before losing its flexibility or plasticity.

The temporary flexibility of the extruded fat-containing confectionery material obtained in the process of EP 0603467-B 1 may last for up to 4 hours or more, e.g. from 1 second or less to 2 hours, e.g. from 10 seconds to 1 hour. During this period of temporary flexibility, the extruded fat-containing confectionery material may be cut cleanly and this is in contrast to fat-containing confectionery material extruded by a process as described in EP 0603467-B 1 after the temporary flexibility has been lost, or to a normal set chocolate which has to be heated slightly for cutting otherwise it would shatter owing to its brittleness.

EP 0603467-B 1 discloses that the extrusion process may be carried out batchwise or continuously and that the extrusion of the fat-containing confectionery material may be carried out as a co-extrusion with other food materials such as ice cream or fondant.

### SUMMARY OF THE INVENTION

We have found surprisingly, that if a fat-containing confectionery material in a hollow or tubular form and a filling comprising another confectionery material are co-extruded by a process as disclosed in EP 0603467-B1 having a wall thickness of from 0.1 to 5mm wherein the filling is flowable under gravity and/or under the pressure of liquid chocolate during extrusion, the solid fat-containing confectionery material forms a boundary for the filling and retains the shape of the filling within the inner wall of the chocolate until it sets. Not only does the product retain its desired shape but it also has an excellent flavour and texture.

Accordingly, the present invention provides a confectionery product comprising a fat-containing confectionery material in a hollow or tubular form surrounding a filling comprising another confectionery material characterised in that the fat-containing confectionery material in a hollow or tubular form has a wall thickness of from 0.1 to 5mm.

### DETAILED DESCRIPTION OF THE INVENTION

The fat-containing confectionery material may be, for instance, dark, milk or white chocolate. The fat containing confectionery material may also include products derived from sugar with or without milk derived components, and fat and solids from vegetable or cocoa sources in differing proportions having a moisture content less than 10%, more usually less than 5% by weight. The fat containing confectionery material may include chocolate substitutes containing direct cocoa butter replacements, stearines, coconut oil, palm oil, butter or any mixture thereof; nut pastes such as peanut butter and fat; praline; confectioner's coatings also known as compound or couvertures, used for covering ice cream or cakes usually comprising chocolate analogues with cocoa butter replaced by a cheaper non-tempering fat; or "Caramac" sold by Nestlé comprising non-cocoa butter fats, sugar and milk. Traditional chocolate normally contains from 30 to 35% fat and in this invention, the fat-containing confectionery material may, if desired, contain normal amounts of fat or less than the normal amount of fat present in chocolate, e.g. it may contain from 16 to 28% fat and preferably from 18 to 25% fat.

The external surface of the wall of the fat-containing confectionery material in a hollow or tubular form may have a wide variety of cross-sectional shapes, e.g. circles, stars, triangles, squares, rectangles, polygons, oval or irregular, non-symmetrical, cartoon characters, etc. Advantageously, the internal surface of the wall of the fat-containing confectionery material in a hollow or tubular form may have a similar shape to the external surface or it may have a different shape.

The thickness of the external surface of the wall of the fat-containing confectionery material is preferably from 0.2 to 4.0mm, more preferably from 0.3 to 3.5mm, even more preferably from 0.4 to 3mm, and especially from 0.5 to 2.5mm. For more simple shapes such as circles, the thickness is preferably from 0.75 to 1.25mm and more preferably from 0.8 to 1.2mm. For more complex shapes such as stars, the thickness is preferably from 1.75 to 2.25mm and more preferably from 1.8 to 2.2mm

The minimum cross-sectional diameter, or the "equivalent diameter" depending on the shape, of the aperture for the filling within the internal surface of the wall of the fat-containing confectionery material may be 1.5mm but is preferably 2.5mm. The maximum diameter of the aperture depends on requirements and could be, for instance, up to 50mm or more but is usually not more than 20mm.

The filling comprising the other confectionery material surrounded by the fat-containing confectionery material in a hollow or tubular form may be fat-based or water-based, for example, ice cream, sorbet, yoghurt, mousse, fondant, praline, marshmallow, nougat, peanut butter, truffle, marzipan, nut pieces, sugar wafer pieces, jelly or mixtures thereof.

Advantageously, flavours or colourings may be added to the filling. The consistency of the filling should be such that it is not substantially flowable on cutting the product.

The product length may vary from 1mm to 1000mm but most typically is from 20mm to 300mm and preferably from 50mm to 150mm.

The co-extruded products may be open at one or both ends so that the filling is visible or they may be closed at both ends with fat-containing confectionery material. The closure at one or both ends may be carried out by an additional enrobing process, e.g. on a standard chocolate enrobing line.

The confectionery product of the present invention may be produced by a cold co-extrusion process, e.g. at ambient temperature such as from 16° to 30°C, similar to that described in EP 0603467-B1 where the dimensions of the die are set to give a wall thickness of the fat-containing confectionery material of from 0.1 to 5mm. The filling at the point of extrusion should have a consistency which makes it pumpable so that it is in a state in which it can fill the hollow outer tube. Solid pieces such as nut pieces and sugar wafer pieces should be sufficiently small to enable them to be pumped without blocking the pump or the co-extrusion die assembly. It should be noted that the nut pieces and the sugar wafer pieces cannot be pumped on their own - they would require a transport media such as a mousse or a praline.

The confectionery product of the present invention when made by cold extrusion is easy to cut into the required length compared to a normal chocolate which is too hard and brittle. The confectionery product of the present invention when made by cold extrusion has a clear definition of the shape which is consistently accurate and has a wall thickness which is regular and uniform.

### EXAMPLES

The following Examples further illustrate the present invention.

### Example 1

Confectionery products in the form of sticks 100mm in length are formed by the cold co-extrusion of a hollow circular tube of milk chocolate while simultaneously filling the aperture with a strawberry flavoured fat-based cream which is pumped to the extruder using a process at ambient temperature similar to that described in EP 0603467-B1. The extruded product is cut to the desired length. The wall thickness is 1mm and the overall diameter is 4.5mm.

On consumption, the product was found to have its desired shape and an excellent flavour and texture.

### Example 2.

Confectionery products 95mm in length having a 5-pointed star cross-section are formed by the cold co-extrusion of a hollow star-shaped tube of dark chocolate while simultaneously filling the aperture with a praline which is pumped to the extruder using a process at ambient temperature similar to that described in EP 0603467-B1. The extruded product is cut to the desired length. The wall thickness is 2mm and the overall diameter is 18mm.

On consumption, the product was found to have its desired shape and an excellent flavour and texture.

### Example 3

A similar procedure to that described in Example 1 was carried out but using a milk chocolate containing only 20% fat instead of the normal milk chocolate there used.

On consumption, the product was found to have its desired shape and an excellent flavour and texture.

## Claims

1. A confectionery product comprising a fat-containing confectionery material in a hollow or tubular form surrounding a filling comprising another confectionery material **characterised in that** the fat-containing confectionery material in a hollow or tubular form has a wall thickness of from 0.1 to 5mm.

2. A confectionery product according to claim 1 wherein the fat-containing confectionery material is dark, milk or white chocolate, compound or couverture.

3. A confectionery product according to claim 1 wherein the external surface of the wall of the fat-containing confectionery material in a hollow or tubular form has a cross-sectional shape of a circle, star, triangle, square, rectangle, polygon, oval or irregular, non-symmetrical or cartoon characters.

4. A confectionery product according to claim 3 wherein the internal surface of the wall of the fat-containing confectionery material in a hollow or tubular form has a similar shape or a different shape to the external surface.

5. A confectionery product according to claim 1 wherein the thickness of the external surface of the wall of the fat-containing confectionery material when it has the cross-sectional shape of a circle is from 0.75 to 1.25mm.

6. A confectionery product according to claim 1 wherein the thickness of the external surface of the wall of the fat-containing confectionery material when it has the cross-sectional shape of a star is from 1.75 to 2.25mm.

7. A confectionery product according to claim 1 wherein the minimum cross-sectional diameter of the aperture for the filling within the internal surface of the wall of the fat-containing confectionery material is 1.5mm.

8. A confectionery product according to claim 1 wherein the maximum cross-sectional diameter of the aperture for the filling within the internal surface of the wall of the fat-containing confectionery material is 50mm.

9. A confectionery product according to claim 1 wherein the filling comprising the other confectionery material surrounded by the fat-containing confectionery material in a hollow or tubular form is fat-based or water-based.

10. A confectionery product according to claim 1 wherein the filling is ice cream, sorbet, yoghurt, mousse, fondant, praline, marshmallow, nougat, peanut butter, marzipan, nut pieces, sugar wafer pieces, jelly or mixtures thereof.

11. A confectionery product according to claim 1 wherein the filling has a flavour or colouring added thereto.

12. A confectionery product according to claim 1 wherein the consistency of the filling is such that it is not substantially flowable on cutting the product.

13. A confectionery product according to claim 1 wherein the product length is from 1mm to 1000mm.

14. A confectionery product according to claim I wherein the product is open at both ends.

15. A confectionery product according to claim 1 wherein the product is closed at both ends with fat-containing confectionery material.

16. A confectionery product according to claim 1 wherein the product is closed at both ends with fat-containing confectionery material using an additional enrobing process.

17. A confectionery product according to claim 1 wherein the fat-containing confectionery material contains normal amounts of fat or less than the normal amount of fat present in chocolate.

18. A process of preparing a confectionery product according to claim 1 which comprises co-extruding at ambient temperature a fat-containing confectionery material in a hollow or tubular form while simultaneously filling the aperture with another confectionery material which is pumped to the extruder in a state in which it is flowable under gravity and/or under the pressure of liquid chocolate during extrusion, and cutting the extruded product to the desired length.
